**Europäisches Patentamt**

**European Patent Office**

**Office européen des brevets**

(19)

(11) **EP 1 061 344 A1**

(12) **EUROPÄISCHE PATENTANMELDUNG**

(43) Veröffentlichungstag:
   **20.12.2000   Patentblatt 2000/51**

(51) Int Cl.⁷: **G01F 1/66**

(21) Anmeldenummer: **99120892.7**

(22) Anmeldetag: **28.10.1999**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(30) Priorität: **11.06.1999   SI   9900159**

(71) Anmelder: **Iskraemeco, Merjenje in Upravljanje Energije, D.D.**
   **4000 Kranj (SI)**

(72) Erfinder:
   • **Debeljak, Zdravko**
   **4240 Radovljica (SI)**

   • **Hrovatin, Rok**
   **1360 Vrhnika (SI)**
   • **Solar, Borut**
   **4220 Skofja Loka (SI)**
   • **Zajec, Damir**
   **4000 Kranj (SI)**

(74) Vertreter: **HOFFMANN - EITLE**
   **Patent- und Rechtsanwälte**
   **Arabellastrasse 4**
   **81925 München (DE)**

(54)   **Messrohr für Ultraschallgaszähler**

(57)   Das Meßrohr (1) gemäß der Erfindung läßt das Strömungsprofil dank seinem trichterförmigen Einlaufteil (L) mit Trennwänden (L), dem Gleichrichter (U) und Labyrinth (O) auf der Austrittseite des Meßrohres (1) und mindestens einem Reflektor (R1), R2), (R3) bestehend aus mehreren Reflexionssegmenten (R11, R12,..) unverfälscht. Die Gasströmung sowohl im Einlauf als auch im Auslauf des Meßrohres besteht aus zwei symmetrischen Teilen, die an beiden Enden ihre Richtung ändern. Dadurch wird die Amplitudenschwankung auf maximal 7% und die Phasenschwankung auf maximal 5% (Fig. 1) reduziert.

Fig. 1

**EP 1 061 344 A1**

Printed by Jouve, 75001 PARIS (FR)

## Beschreibung

### Das technische Problem

Die Erfindung betrifft das Design des Meßrohres des Gaszählers. Das Meßrohr ist so ausgelegt, daß das Geschwindigkeitsprofil am wenigsten verfälscht wird und gleichzeitig den Einfluß der Störungen am Anfang und Ende das Meßrohres reduziert.

### Stand der Technik

Beim Messen des Gasdurchflusses wird das Prinzip der Laufzeitdifferenzen angewandt. Es werden die Laufzeiten des Signals in der Richtung und gegen die Richtung des Gasflusses gemessen. Daraus ergibt sich eine Laufzeitdifferenz. Sie ist ein Maß für die mittlere Strömungsgeschwindigkeit des Gases.

Der Durchfluss kann genau genug ermittelt werden, wenn das angenommene Strömungsprofil auch dem tatsächlichen im Meßrohr vorhandenen Strömungsprofil entspricht. Ist diese Bedingung nicht erfüllt, wird lediglich eine mittlere Strömungsgeschwindigkeit errechnet. Ein weiterer Fehler kommt hinzu, da das Strömungsprofil von der Zusammensetzung des Gases abhängt. Das nicht stationäre Strömungsprofil, verursacht durch die Turbulenzen am Anfang bzw. am Ende des Meßrohres, stellt ein weiteres Problem dar. Die Folgen des nicht stationären Strömungsprofil sind die Schwankungen der Amplitude und Phase des Schalls, wodurch die Meßgenauigkeit beeinträchtigt wird. Die Form des Meßrohrs muß darauf optimiert werden. Es dürfen keine Unebenheiten vorhanden sein. Die Strömung wird insbesondere wegen des diffuserförmigen Designs und Änderungen des Querschnittes instabil.

In den Patenten DE 19 549 162 und DE 4 010 148 werden die Meßrohren rechteckiger Form und mehrfachen Reflexion des Schalls an konkaven Reflektoren behandelt. Diese Reflektoren tragen zwar zu einem gutem Nutzsignal/Störsignalverhältnis bei, es wird aber dadurch die Strömungsgeschwindigkeit verändert. Dies wirkt sich wiederum negativ auf die Meßgenauigkeit aus.

Der asymmetrische Ein- und Auslauf in das Meßrohr wird im Patent WO 93/16357 behandelt. Der Nachteil dieser Lösung ist, daß sie nur bis zu einem Durchmesser / Nennweite von 5 mm gilt. Bei größeren Abmessungen werden die Einlauf- und Auslaufteile des Meßrohres zu groß (12 mal Nennweite).

Der Erfinder war mit den gegebenen Lösungen nicht zufrieden und erfand eine für seine Zwecke geeignetere Lösung. Sie ist das Thema dieser Patentanmeldung.

### Aufgabe der Erfindung

Der Erfindung liegt die Aufgabe zugrunde, ein Meßrohr für einen Ultraschallgaszähler vorzusehen, der das Geschwindigkeitsprofil wenig verfälscht und gleichzeitig den Einfluß der Störungen am Anfang und Ende des Meßrohrs reduziert.

Diese Aufgabe wird durch ein Meßrohr mit den Merkmalen des Anspruchs 1 gelöst. Vorteilhafte Ausführungsformen sind durch die übrigen Ansprüche gekennzeichnet.

### Beschreibung der neuen Erfindung

Die neue Erfindung betrifft das besonders geformten Einlauf- und Auslaufteil, sowie die in Segmente aufgeteilten Reflektoren des Meßrohres. Die Erfindung ist weiter unten detailliert beschrieben und in Figuren dargestellt.

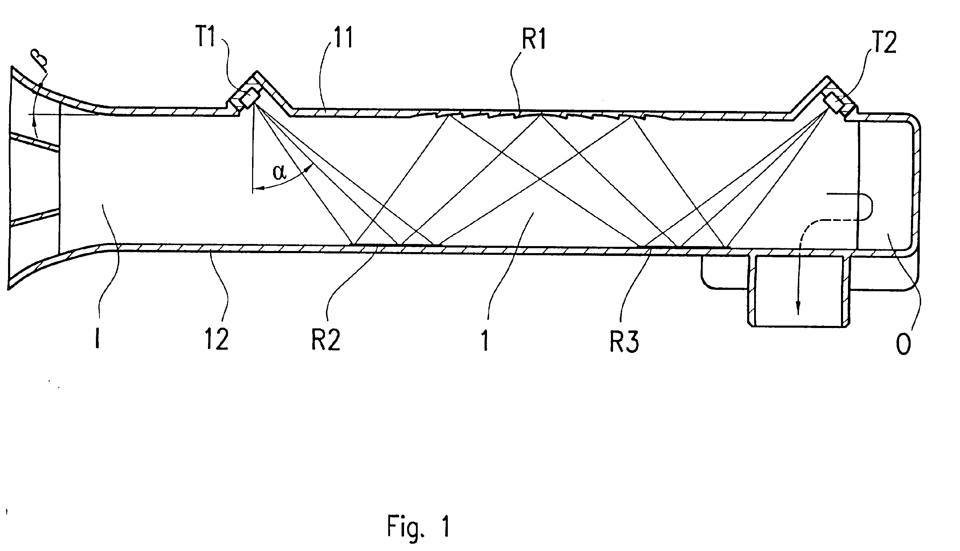

Fig. 1:     Längsschnitt des Meßrohres

Fig. 2:     "Explosionszeichnung" des Gaszählers

Fig. 3:     3D Darstellung des Meßrohres

Fig. 4:     Verlauf der Schallwege im Meßrohr

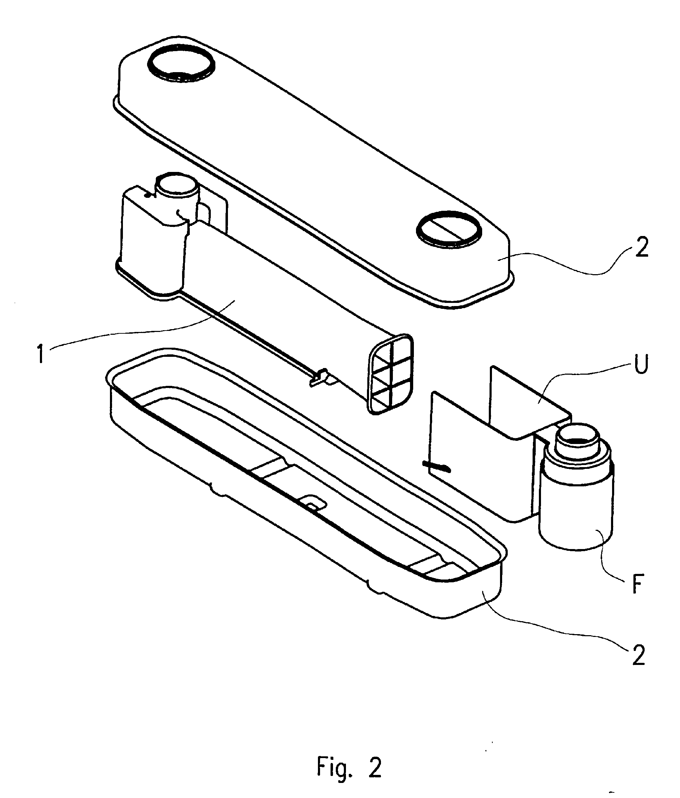

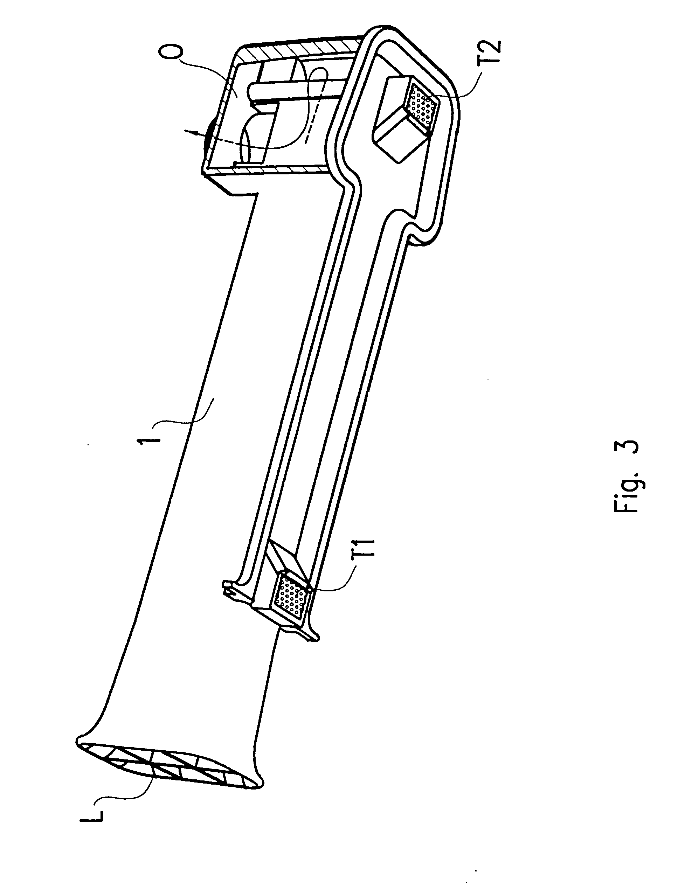

Das in einem Metallgehäuse 2 befindliche erfindungsgemäße Meßrohr 1 ist in der Fig. 2 dargestellt. Mittels eines im Einlaufteil untergebrachten Filters F werden die Staubpartikel gefiltert und die Strömung beruhigt. Das in das Meßrohr strömende Gas wird in einem Gleichrichterteil U symmetrisch gerichtet. Wie Fig. 3 zeigt, die Strömung wird im Einlaufteil des Meßrohres, wo die Laufzeiten gemessen werden, durch das trichterförmige Design weiter stabilisiert.

Der Übergang zwischen dem trichterförmigen Teil und dem Meßrohr ist mit dem maximal möglichen Radien ausgeführt. Im Trichter befinden sich mehrere Trennwände L (Gitter), um eine laminare Strömung gewährleisten zu können. Das Auslaufteil O ist in Form eines Labyrinthes ausgeführt, ohne Teilreflexionen, die rückwirkend auf die Strömung ungünstig wirken würden. Das Gas teilt sich im Auslaufteil in zwei symmetrischen Teile, die an der äußeren Seite des Meßrohres in die Gegenrichtung zum Austritt umgelenkt werden. Dieser befindet sich oberhalb der Fläche 12 des Meßrohres 1. Dadurch wurde ein eventueller Einfluß des zweiten Ultraschallwandlers T2 auf die Strömung vermieden. Bei den vorhandenen Abmessungen wurde dadurch eine optimale Ausnutzung der Meßrohrlänge erreicht und damit eine hohe Genauigkeit der Messung.

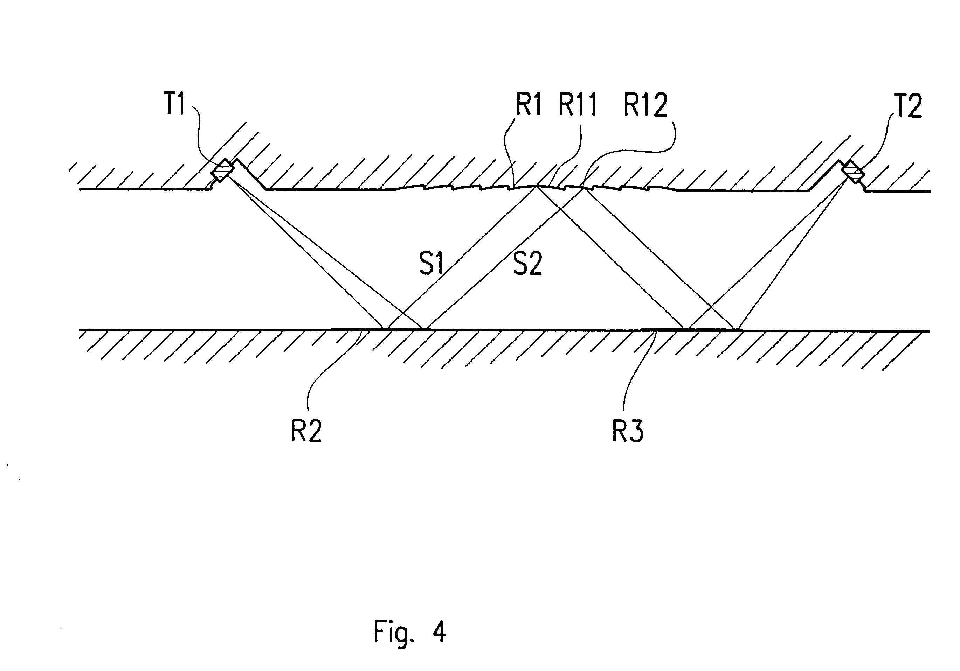

Der Schallweg vom Ultraschallwandler T1 zum Ultraschallwandler T2 wird durch die Reflektoren R1, R2 und R3 bestimmt. Mindestens einer dieser Reflektoren besteht aus weiteren Reflexionssegmenten z.B. (R11), (R12), .... Jedes der Segmente lenkt den Schall in die Empfängerrichtung, so daß die Schallwege nach Reflexionen der einzelnen Reflexionssegmente um ein Vielfaches der Wellenlänge $\lambda$ voneinander abweichen (siehe Fig. 4).

$$\Delta s = s_1 - s_2 = n \cdot \lambda$$

wobei n = 1, 2, 3, ...

Die maximale Abweichung beträgt bis zu 10% der Wellenlänge ($\pm 0.1 \cdot \lambda$).

Gute Ergebnisse werden mit einem Öffnungswinkel des Trichters von $\beta$ = 4 bis 8° erzielt. Im erfindungsgemäßen Meßrohr ohne das Einlaufteil kommt es bei einem Gasdurchfluß von etwa Q = 6 m$^3$/h zu Amplituden- und Phasenschwankungen des Signals. Das Verhältnis zwischen der maximalen und minimalen Amplitude beträgt 2,5 . Der Mittelwert der Amplitude wird auf nur 50% des Wertes der laminaren Strömung reduziert. Die Phasenschwankung beträgt bis zu einem Faktor von 0,5 der Periode. Das Einlaufteil verbessert die Charakteristik des Meßrohres. Das Verhältnis der maximalen und minimalen Amplitude erreicht in diesem Fall lediglich einen Wert von 1,07. Der Mittelwert der Amplitude beträgt 92% des Wertes der laminaren Strömung. Die Phase schwankt nur noch bis zu 5% der Periode.

Bei einer Frequenz des Ultraschalls von 350 kHz und einer Schallgeschindigkeit von 410 m/s beträgt die Wellenlänge $\lambda$=1,15 mm. Der Reflektor R1 ist in neun Reflexionssegmente aufgeteilt. Die Unebenheit durch diese Reflexionssegmente beträgt nur 0,85 mm, damit wird das Strömungsprofil nicht gestört.

**Patentansprüche**

1.  Das Meßrohr (1) des Ultraschallgaszählers, gekennzeichnet durch ein trichterförmigen Einlaufteil, geteilt durch Trennwände (L), mit einem Gleichrichter (U), Labyrinth im Auslaufteil (O) und mit mindestens einem Reflektor (R1), (R2), (R3) der (die) wiederum in Teilsegmente (R11), (R12), ... aufgeteilt ist (sind).

2.  Das Meßrohr nach Anspruch 1, gekennzeichnet dadurch, daß der Öffnungswinkel ($\beta$) des Trichters $\beta$ = 4 bis 8° beträgt.

3.  Das Meßrohr nach Anspruch 1 und 2, gekennzeichnet dadurch, daß die Reflexionssegmente R11, R12, R13... den Schall so lenken bzw. reflektieren, daß sich die Schallwege bei einer gleichzeitigen Reflexion von Reflexionssegmenten um ein Vielfaches der Wellenlänge unterscheiden und dabei weniger als ein Zehntel der Wellenlänge voneinander abweichen.

Fig. 1

EP 1 061 344 A1

2

1

U

F

2

Fig. 2

Fig. 3

EP 1 061 344 A1

Fig. 4

EP 1 061 344 A1

**Europäisches Patentamt**

## EUROPÄISCHER RECHERCHENBERICHT

Nummer der Anmeldung

EP 99 12 0892

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 580 099 A (KROMSCHROEDER AG G) 26. Januar 1994 (1994-01-26) * Spalte 6, Zeile 22 - Zeile 31; Abbildung 1 * --- | 1-3 | G01F1/66 |
| A | EP 0 708 313 A (SIEMENS AG) 24. April 1996 (1996-04-24) * Abbildung * --- | 1-3 | |
| A | FR 2 357 869 A (FIAT SPA) 3. Februar 1978 (1978-02-03) * Seite 2, Zeile 35 - Seite 3, Zeile 15; Abbildungen 1,4 * --- | 1 | |
| D,A | DE 195 49 162 A (DANFOSS AS) 1. August 1996 (1996-08-01) * Spalte 3, Zeile 3 - Spalte 4, Zeile 54; Abbildungen 1-5 * --- | 1-3 | |
| D,A | DE 40 10 148 A (SIEMENS AG) 2. Oktober 1991 (1991-10-02) * Seite 1, Zeile 26 - Seite 7, Zeile 59; Abbildungen 1-3 * --- | 1-3 | RECHERCHIERTE SACHGEBIETE (Int.Cl.7) G01F |
| D,A | WO 93 16357 A (SIEMENS AG) 19. August 1993 (1993-08-19) * Seite 2, Zeile 4 - Seite 3, Zeile 20; Abbildung * ----- | 1-3 | |

Der vorliegende Recherchenbericht wurde für alle Patentansprüche erstellt

| Recherchenort | Abschlußdatum der Recherche | Prüfer |
|---|---|---|
| DEN HAAG | 27. September 2000 | Heinsius, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 99 12 0892

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-09-2000

| Im Recherchenbericht angeführtes Patentdokument | Datum der Veröffentlichung | Mitglied(er) der Patentfamilie | Datum der Veröffentlichung |
|---|---|---|---|
| EP 0580099 A | 26-01-1994 | DE 4224372 A<br>US 5433117 A | 27-01-1994<br>18-07-1995 |
| EP 0708313 A | 24-04-1996 | DE 4437588 A<br>AT 167287 T<br>DE 59502485 D | 25-04-1996<br>15-06-1998<br>16-07-1998 |
| FR 2357869 A | 03-02-1978 | IT 1071241 B<br>DE 2730770 A<br>GB 1555042 A<br>US 4104915 A | 02-04-1985<br>12-01-1978<br>07-11-1979<br>08-08-1978 |
| DE 19549162 A | 01-08-1996 | DK 11295 A<br>AU 4482696 A<br>CN 1172528 A<br>WO 9624029 A<br>EP 0807243 A | 01-08-1996<br>21-08-1996<br>04-02-1998<br>08-08-1996<br>19-11-1997 |
| DE 4010148 A | 02-10-1991 | AT 110165 T<br>AU 7059191 A<br>CA 2079213 A<br>DE 59006857 D<br>DK 521855 T<br>WO 9114925 A<br>EP 0521855 A<br>ES 2059112 T<br>FI 924341 A<br>NO 923771 A<br>US 5372047 A | 15-09-1994<br>21-10-1991<br>30-09-1991<br>22-09-1994<br>02-01-1995<br>03-10-1991<br>13-01-1993<br>01-11-1994<br>28-09-1992<br>29-09-1992<br>13-12-1994 |
| WO 9316357 A | 19-08-1993 | AT 147852 T<br>DE 59305186 D<br>EP 0672238 A<br>US 5540105 A | 15-02-1997<br>27-02-1997<br>20-09-1995<br>30-07-1996 |

EPO FORM P0461

Für nähere Einzelheiten zu diesem Anhang : siehe Amtsblatt des Europäischen Patentamts, Nr.12/82